# EUROPÄISCHE PATENTSCHRIFT

(11) **EP 0 508 249 B1**
(45) Veröffentlichungstag und Bekanntmachung des Hinweises auf die Patenterteilung: **13.03.1996**
(21) Anmeldenummer: 92105408.6
(22) Anmeldetag: 28.03.1992
(51) Int. Cl.: G01L 9/02, G01L 19/06

(54) **Drucksensor**
Pressure sensor
Palpeur de pression

(30) Priorität: 06.04.1991 DE 4111149
(43) Veröffentlichungstag der Anmeldung: 14.10.1992
(73) Patentinhaber: ROBERT BOSCH GMBH, D-70442 Stuttgart (DE)
(72) Erfinder: Schmid, Kurt, W-7257 Ditzingen 4 (DE); Heinz, Rudolf, Dr. Dipl.-Ing., W-7253 Renningen (DE); Schnoor, Ulrich, Ing. Grad., W-7000 Stuttgart 40 (DE)

(56) Entgegenhaltungen:
- EP-A- 0 094 446
- DE-A- 3 919 059
- DE-B- 2 541 944
- US-A- 4 782 319

## Beschreibung

### Stand der Technik

Die Erfindung geht aus von einem Drucksensor nach der Gattung der Hauptansprüche. Es sind derartige Drucksensoren bekannt, bei denen Widerstände bzw. piezoresistive Meßelemente auf einer Membran angeordnet sind, die sich unter der Einwirkung eines Druckes elastisch verformt, d. h. wölbt. Durch die damit erzeugte Dehnung oder Stauchung bzw. Beanspruchung auf Zug oder Druck der Widerstände wird ein der Belastung proportionales Signal erzeugt. Dazu werden die Widerstände bzw. piezoresistiven Meßelemente meist in Form einer Meßbrücke verschaltet. Aus der DE-OS 39 19 059 ist beispielsweise ein Drucksensor bekannt, bei dem die Meßelemente in Form von Dickschichtwiderständen auf einem als Membran dienenden Substrat angeordnet sind. In der DE-OS 39 28 542 ist ein Halbleiter-Druckwandler beschrieben, bei dem die Membran als Siliziummembran ausgebildet ist und die Widerstände zum Beispiel durch Diffusion erstellt sind.

Ein derartiges Zusammenwirken von Widerständen mit einer Membran aus zum Beispiel Keramik, Stahl, Glas, Silicium oder anderen Materialien hat den Nachteil, daß die Sicherheit der Membranen gegen Bersten oftmals nicht ausreicht bzw. die im Betriebszustand geforderte Sicherheit nur schwer einzuhalten ist. Daher müssen derartige Membranen oftmals sehr dick ausgebildet werden, was die Meßgenauigkeit und den Meßbereich einschränkt, oder ein derartiger Sensor erreicht seine Einsatzgrenze, ohne die geforderte oder benötigte Sicherheit zu bieten. Weiterhin werden bei derartigen Sensoren beispielsweise mit der Membran zusammenwirkende Dickschichtwiderstände auf Zug beansprucht. Die Belastbarkeit von Dickschichtwiderständen auf Zug ist jedoch sehr gering, so daß demzufolge die Druckbelastbarkeit des Sensors oftmals stark eingeschränkt ist.

### Vorteile der Erfindung

Die erfindungsgemäßen Sensoren mit den Merkmalen der Ansprüche 1, 2 haben demgegenüber den Vorteil, daß die elastische Verformung der Membran verringert ist. Die Sensoren weisen damit einen wesentlich höheren Berstdruck und damit eine höhere Sicherheit bei vergleichbaren Membranstärken auf, bzw. ermöglicht bei verringerter Membranstärke eine höhere Auflösung des Meßsignals. Bei dünner Membran kann das Meßsignal vergrößert werden oder zumindest vergleichbar groß gehalten werden, auch wenn nur zwei aktive Widerstände bzw. Meßelemente genutzt werden.

### Zeichnung

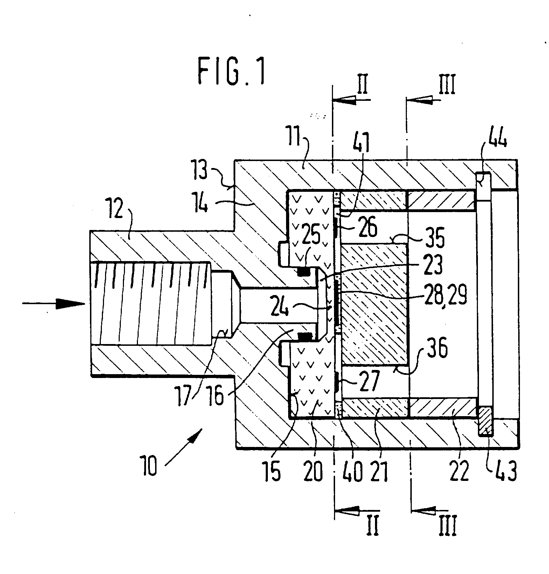

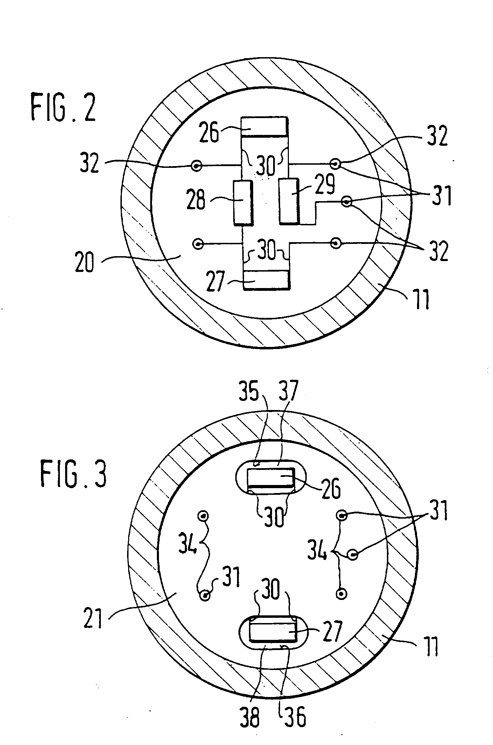

Ein Ausführungsbeispiel der Erfindung ist in der nachfolgenden Beschreibung und Zeichnung näher erläutert. Letztere zeigt in vereinfachter Form in Figur 1 einen Längsschnitt durch den Drucksensor, in Figur 2 einen Schnitt längs II-II nach Figur 1 und in Figur 3 einen Schnitt längs III-III nach Figur 1.

### Beschreibung des Ausführungsbeispiels

Der in den Figuren 1 bis 3 dargestellte Drucksensor 10 hat ein etwa becherförmiges Gehäuse 11 mit einem hülsenförmigen Fortsatz 12 an der Außenseite 13 des Bodens 14. An der Innenseite 15 des Bodens 14 ist ein zylindrischer Fortsatz 16 angebracht, der samt Boden 14 von einer Bohrung 17 durchdrungen ist, die vom Inneren des hülsenförmigen Fortsatzes 12 ausgeht. Über den hülsenförmigen Fortsatz 12 stehen die Bohrung 14 und das Innere des Gehäuses 11 mit einer hier nicht dargestellten Druckquelle in Verbindung.

In das Innere des Gehäuses sind hintereinander ein scheibenförmiger Membranträger 20, eine Gegenscheibe 21 und ein Stützring 22 eingesetzt. Der Membranträger 20, der beispielsweise aus Keramik, Silizium, Stahl, Titan oder ähnlichem besteht, hat eine den Fortsatz 16 aufnehmende zylindrische Vertiefung 23 mit entsprechendem Durchmesser. Der Grund der Vertiefung 23 ist als Membran 24 ausgebildet. Die Längserstreckung des Fortsatzes 16 und der Vertiefung 23 sind so aufeinander abgestimmt, daß der Membranträger 20 am Boden 14 des Gehäuses 11 anliegt, ohne daß die Membran 24 sich am Fortsatz 16 abstützt. Zur Abdichtung gegen das Innere des Gehäuses 11 ist am Außenumfang des Fortsatzes 16 ein Dichtring 25 angeordnet, der an der Wandung der Vertiefung 23 anliegt.

Auf den Membranträger 20 und die Membran 24 sind auf die der Gegenscheibe 21 zugewandten Stirnseite vier Widerstände 26 - 29 aufgebracht und mit Leiterbahnen 30 verschaltet. Die Widerstände 26 - 29 und die Leiterbahnen 30 sind in Dickschicht- oder Dünnschichttechnik erstellt und zu einer Vollbrücke verschaltet. Als Dickschichtwiderstände können z. B. solche aus Cermet, Contaktiv-Plastik oder Metall verwendet werden, deren spezifischer Widerstand sich bei Krafteinwirkung ändert. Der Anschluß der Speisespannung und die Ableitung der Meßsignale erfolgt über metallische Anschlußstifte 31, die in Sackbohrungen 32 in der der Gegenscheibe 21 zugewandten Stirnseite des Membranträgers 20 angeordnet sind. Die Anschlußstifte 31 durchdringen die Leiterbahnen 30 und sind mit diesen verlötet.

Die Widerstände 26 - 29 sind so angeordnet, daß sich die beiden Widerstände 28 und 29 relativ nah beieinander auf der Membran 24 und die beiden Widerstände 26, 27 sich diametral gegenüberliegend auf dem Membranträger 20 befinden. Die auf der Membran 24 befindlichen Widerstände 28, 29 dienen als variable bzw. veränderbare Widerstände der Meßbrücke, das heißt als piezoresistive Meßelemente und sind entsprechend beschaffen. An die Widerstände 26 bis 29 wird dazu eine Spannung angelegt, und der elektrische (ohmsche) Widerstand im piezoresistiven Meßelement wird durch den einwirkenden Druck verändert.

Bei Verwendung eines elektrisch leitenden Materials für den Membranträger 20 bzw. die Membran 24 sind die Widerstände 26 - 29 und die Leiterbahnen 30 durch eine geeignete Isolationsschicht elektrisch gegeneinander isoliert. Die Anschlußstifte 31 können so angeordnet werden, daß sie keinen Kontakt zum Membranträger 20 haben, das heißt, sie sind frei in den Sackbohrungen geführt. Es ist jedoch vorteilhaft, auch die Anschlußstifte 31 entsprechend gegen die Wandungen der Sackbohrungen zu isolieren.

Die Gegenscheibe 21 ist mit Bohrungen 34 versehen, die nach der Endmontage mit den Sackbohrungen 32 des Membranträgers 20 fluchten. Durch diese Bohrungen 24 sind die Anschlußstifte 31 geführt. Darüberhinaus weist die Gegenscheibe 21 zwei sich diametral gegenüberliegende Langlöcher 35, 36 auf, die so angeordnet sind, daß sich im endmontierten Zustand die Widerstände 26, 27 jeweils innerhalb der durch die Wandungen der Bohrungen 35 bzw. 36 gebildeten Flächen 37 bzw. 38 befinden. Die Abmessungen der Flächen 37 bzw. 38 sind größer als die der Widerstände 26 bzw. 27.

Die Gegenscheibe 21 und der mit Widerständen 26 - 29 und Leiterbahnen 30 versehene Membranträger 20 mit Membran 24 sind durch ein Verbindungsmittel 40 fest miteinander verbunden. Dieses kann zum Beispiel aus Klebstoff oder niederschmelzendem Glas bestehen. Vorteilhafterweise ist das Verbindungsmittel 40 so auf die Gegenscheibe 21 aufgebracht, daß ein umlaufender Kreisring 41 frei bleibt. Um einen definierten Abstand zwischen Membranträger 20 und Gegenscheibe 21 zu erreichen, kann ein ringförmiger Absatz an der Gegenscheibe angebracht werden. Dadurch ist das Verbindungsmittel 40 noch dünner aufzutragen, was die Hysterese des Sensors verkleinert und die Haftfestigkeit weiter erhöht. Die Gegenscheibe 21 kann wie der Membranträger 20 aus Keramik, Stahl, Titan oder ähnlichen Materialien gefertigt sein, so daß für jeden Anwendungsfall des Drucksensors spezifische Materialkombinationen möglich sind. Bei Verwendung von elektrisch leitenden Materialien ist eine Isolierung gegenüber den Widerständen 26 - 29 und Leiterbahnen 30 zu gewährleisten. Dies kann vorteilhaft bereits durch das Verbindungsmittel erfolgen.

Membranträger 20 und Gegenscheibe 21 werden durch den an der Gegenscheibe anliegenden Stützring 22 im Gehäuse fixiert. Dazu liegt am Stützring 22, an der der Gegenscheibe 21 gegenüberliegenden Stirnseite, ein Sicherungsring 43 an, der in einer Ringnut 44 des Gehäuses 11 eingebracht ist. Statt des Sicherungsringes 43 kann auch ein Schraubring mit Gewinde verwendet werden. Dadurch kann die Vorspannung definierter eingestellt werden.

Beim Betrieb des Sensors steht die Membran 24 über die Bohrung 17 und den hülsenförmigen Vorsatz 12 mit einer Druckquelle in Verbindung. Die zwischen der Membran 24 und der Gegenscheibe 21 befindlichen Widerstände 28, 29 werden auf Druck beansprucht und ändern ihren Widerstand entsprechend ihrem Druckkoeffizienten. Damit wird ein entsprechendes Sensorsignal erzeugt. Eine elastische Deformation der Membran 24, das heißt ein Aufwölben, wird nahezu vollständig vermieden. Damit wird gleichzeitig eine Zugbeanspruchung der Widerstände 26 - 29 vermieden.

Zur Stabilisierung des Nullpunktes bei Temperaturschwankungen sind die beiden Widerstände 28, 29 mit den Widerständen 26, 27 zu einer Vollbrücke verschaltet. Durch die Ausbildung der Gegenscheibe 21 und die entsprechende Größe und Anordnung der Langlöcher 35, 36 und die entsprechende Dicke des Verbindungsmittels 40 werden die Widerstände 26, 27 nicht durch den Druck belastet und dienen somit der Temperaturkompensation. Gleichzeitig ist über die Langlöcher 35, 36 ein Laserabgleich (Lasertrimmen) der Meßbrücke möglich.

Auf der freien Oberfläche der dem Membranträger 20 abgewandten Stirnseite der Gegenscheibe 21 können thermische Ausgleichsnetzwerke, Verstärker und weitere Elektronik angebracht werden. Darüberhinaus können statt der Widerstände und Leiterbahnen in Dickschicht- oder Dünnschichttechnik auch Silizium-Halbleiterelemente verwendet werden.

Der beschriebene Drucksensor eignet sich unter anderem für die Anwendung in hydraulischen Systemen oder hydraulischen Bremsanlagen, wie zum Beispiel beim ABS-System.

## Patentansprüche

1. Drucksensor mit einer Membran (24), die mit mindestens einem seinen Widerstandswert druckabhängig ändernden Widerstand (28, 29) zusammenwirkt, dadurch gekennzeichnet, daß die Membran (24) bei Einwirken eines Druckes an einem Gegenelement (21) anliegt, so daß ein Durchbiegen der Membran (24) weitgehend vermieden wird.

2. Drucksensor mit einer Membran (24), die mit mindestens einem seinen Widerstandswert druckabhängig ändernden Widerstand (28, 29) zusammenwirkt, dadurch gekennzeichnet, daß der mindestens eine druckabhängige Widerstand (28, 29) auf der Membran (24) angeordnet ist und daß der mindestens eine Widerstand (28, 29) an einem Gegenelement (21) anliegt, so daß ein Durchbiegen der Membran (24) weitgehend vermieden wird.

3. Drucksensor nach Anspruch 1 oder 2, dadurch gekennzeichnet, daß die Membran (24) aus einem Membranträger (20) herausgeformt ist.

4. Drucksensor nach einem der Ansprüche 1 bis 3, dadurch gekennzeichnet, daß der Membranträger (20) und das Gegenelement (21) fest miteinander verbunden sind.

5. Drucksensor nach einem der Ansprüche 1 bis 4, dadurch gekennzeichnet, daß mindestens ein zusätzlicher, nicht druckbelasteter Widerstand (26, 27) auf dem Membranträger (20) angeordnet und mit dem seinen Widerstandswert druckabhängig ändernden Widerstand (28, 29) zu einer Meßbrücke verschaltet ist.

6. Drucksensor nach einem der Ansprüche 1 bis 5, dadurch gekennzeichnet, daß das Gegenelement (21) mindestens eine Ausnehmung (35, 36) aufweist, in deren Bereich sich der auf dem Membranträger angeordnete zusätzliche, nicht druckbelastete Widerstand befindet.

7. Drucksensor nach einem der Ansprüche 1 bis 6, dadurch gekennzeichnet, daß auf der Membran (24) zwei Widerstände (28, 29) und auf den Membranträger (20) ebenfalls zwei zusätzliche, nicht druckbelastete Widerstände (26, 27) angeordnet sind, die zu einer Vollbrücke verschaltet sind.

8. Drucksensor nach einem der Ansprüche 1 bis 7, dadurch gekennzeichnet, daß jeder Widerstand (26 - 29) elektrisch leitend mit Leiterbahnen (30) verbunden ist, die wiederum mit Ableitungen (31) verbunden sind, und daß die Ableitungen in Vertiefungen (32) des Membranträgers (20) ragen.

9. Drucksensor nach einem der Ansprüche 1 bis 8, dadurch gekennzeichnet, daß das Gegenelement (21) mit Öffnungen (34) zur Aufnahme der Ableitungen (31) versehen ist.

10. Drucksensor nach einem der Ansprüche 1 bis 9, dadurch gekennzeichnet, daß die Widerstände (26 - 29) und die Leiterbahnen (30) in Dünnschichttechnik erstellt sind.

11. Drucksensor nach einem der Ansprüche 1 bis 9, dadurch gekennzeichnet, daß die Widerstände (26 - 29) und die Leiterbahnen (30) in Dickschichttechnik erstellt sind.

12. Drucksensor nach einem der Ansprüche 1 bis 9, dadurch gekennzeichnet, daß die Widerstände (26 - 29) als Silizium-Halbleiterelemente ausgebildet sind.

## Claims

1. Pressure sensor having a diaphragm (24) which interacts with at least one resistor (28, 29), the resistance value of which changes as a function of pressure, characterized in that the diaphragm (24) bears against a mating element (21) during the action of a pressure, with the result that bending of the diaphragm (24) is largely avoided.

2. Pressure sensor having a diaphragm (24) which interacts with at least one resistor (28, 29), the resistance value of which changes as a function of pressure, characterized in that the at least one pressure-dependent resistor (28, 29) is arranged on the diaphragm (24), and in that the at least one resistor (28, 29) bears against a mating element (21), with the result that bending of the diaphragm (24) is largely avoided.

3. Pressure sensor according to Claim 1 or 2, characterized in that the diaphragm (24) is formed from a diaphragm carrier (20).

4. Pressure sensor according to one of Claims 1 to 3, characterized in that the diaphragm carrier (20) and the mating element (21) are permanently connected to one another.

5. Pressure sensor according to one of Claims 1 to 4, characterized in that at least one additional resistor (26, 27), which is not subjected to pressure, is arranged on the diaphragm carrier (20) and is interconnected with the resistor (28, 29), the resistance value of which changes as a function of pressure, to form a measuring bridge.

6. Pressure sensor according to one of Claims 1 to 5, characterized in that the mating element (21) has at least one recess (35, 36), in the region of which is situated the additional resistor which is not subjected to pressure and is arranged on the diaphragm carrier.

7. Pressure sensor according to one of Claims 1 to 6, characterized in that two resistors (28, 29) are arranged on the diaphragm (24) and two additional resistors (26, 27), which are not subjected to pressure, are likewise arranged on the diaphragm carrier (20), all of which resistors are interconnected to form a full bridge.

8. Pressure sensor according to one of Claims 1 to 7, characterized in that each resistor (26 - 29) is electrically conductively connected to conductor tracks (30), which are in turn connected to outputs (31), and in that the outputs project into depressions (32) in the diaphragm carrier (20).

9. Pressure sensor according to one of Claims 1 to 8, characterized in that the mating element (21) is provided with openings (34) for receiving the outputs (31).

10. Pressure sensor according to one of Claims 1 to 9, characterized in that the resistors (26 - 29) and the conductor tracks (30) are produced using thin-film technology.

11. Pressure sensor according to one of Claims 1 to 9, characterized in that the resistors (26 - 29) and the conductor tracks (30) are produced using thick-film technology.

12. Pressure sensor according to one of Claims 1 to 9, characterized in that the resistors (26 - 29) are designed as silicon semiconductor elements.

## Revendications

1. Détecteur de pression avec une membrane (24), qui coopère avec au moins une résistance (28, 29) qui modifie sa valeur de résistance en fonction de la pression, détecteur de pression caractérisé en ce que la membrane (24) repose sur un contre-élément (21) lorsqu'une pression s'exerce, de telle sorte qu'on évite largement un fléchissement de la membrane (24)

2. Détecteur de pression avec une membrane (24), qui coopère avec au moins une résistance (28, 29) qui modifie sa valeur de résistance en fonction de la pression, détecteur de pression caractérisé en ce que l'une au moins des résistances (28, 29) repose sur un contre-élément (21), de telle sorte que soit largement évité un fléchissement de la membrane (24).

3. Détecteur de pression selon la revendication 1 ou 2, caractérisé en ce que la membrane (24) est formée à partir d'un support de membrane (20).

4. Détecteur de pression selon l'une des revendications 1 à 3, caractérisé en ce que le support de membrane (20) et le contre-élément (21) sont reliés solidairement l'un à l'autre.

5. Détecteur de pression selon l'une des revendications 1 à 4, caractérisé en ce qu'au moins une résistance supplémentaire, non soumise à la pression (26, 27) est disposée sur le support de membrane (20) et est branchée avec la résistance, qui modifie sa valeur de résistance en fonction de la pression, pour former un pont de mesure.

6. Détecteur de pression selon l'une des revendications 1 à 5, caractérisé en ce que le contre-élément (21) présente au moins un évidement (35, 36), dans la zone duquel se trouve la résistance supplémentaire disposée sur le support de membrane, qui n'est pas soumise à la pression.

7. Détecteur de pression selon l'une des revendications 1 à 6, caractérisé en ce que sur la membrane (24), on dispose deux résistances (28, 29) et sur le support de membrane (20) également deux résistances supplémentaires non soumises à la pression (26, 27), qui sont branchées de façon à former un pont complet.

8. Détecteur de pression selon l'une des revendications 1 à 7, caractérisé en ce que chaque résistance (26 - 29) est reliée électriquement à des pistes conductrices (30), qui à leur tour sont reliées à des dérivations (31) et en ce que les dérivations pénètrent dans des cavités (32) du support de membrane (20).

9. Détecteur de pression selon l'une des revendications 1 à 8, caractérisé en ce que le contre-élément (21) est pourvu d'ouvertures (34) servant à recevoir les dérivations (31).

10. Détecteur de pression selon l'une des revendications 1 à 9, caractérisé en ce que les résistances (26 - 29) et les pistes conductrices (30) sont réalisées selon la technique des couches minces.

11. Détecteur de pression selon l'une des revendications 1 à 9, caractérisé en ce que les résistances (26 - 29) et les pistes conductrices (30) sont construites selon la technique des couches épaisses.

12. Détecteur de pression selon l'une des revendications 1 à 9, caractérisé en ce que les résistances (26 - 29) sont constituées sous la forme d'éléments semiconducteurs au silicium.
